# EUROPEAN PATENT SPECIFICATION

(11) **EP 3 218 606 B1**
(45) Date of publication and mention of the grant of the patent: **13.02.2019**
(21) Application number: 15818033.1
(22) Date of filing: 11.11.2015
(51) Int. Cl.: F04D 13/06, F04D 13/08, F04D 29/58, H02K 9/19, H02K 1/32, H02K 7/00, H02K 9/20

(54) **ELECTRIC PUMP WITH CLOSED LOOP COOLING SYSTEM**
ELEKTROPUMPE MIT KREISLAUFKÜHLUNG
POMPE ÉLECTRIQUE AVEC REFROIDISSEMENT EN SYSTÈME FERMÉ

(30) Priority: 13.11.2014 IT BO20140638
(43) Date of publication of application: 20.09.2017
(73) Proprietor: Caprari S.p.A., 41123 Modena (IT)
(72) Inventor: GAMBIGLIANI ZOCCOLI, Antonio, 41123 Modena (IT); MUZZIOLI, Christian, 41123 Modena (IT)
(74) Representative: Manzella & Associati
(86) International application number: PCT/IB2015/058714
(87) International publication number: WO 2016/075636

(56) References cited:
- EP-A1- 2 604 860
- US-A1- 2003 143 093
- US-A1- 2014 105 769

## Description

### Technical field

The present invention concerns an electric pump.

### Prior art

It has been known that for transporting fluids from a first height to a second height, higher that the first, pump members are used, of the centrifugal type. Centrifugal pumps usually comprise one or more pump stages predisposed to be crossed by the fluid to be transported, each comprising an impeller and a diffuser suitably mounted on a shaft, so called "pump shaft", and inserted inside a containment cover.

In particular, it is known the use of centrifugal pumps for transporting waste fluids, such as sewage, waste water or industrial fluids, which are usually dispersions of solid parts, for example sand or scraps, in a liquid part, generally aqueous.

Especially in this kind of pump members, it is important to ensure the correct cooling of the electric part predisposed to command the rotation of the pump shaft at the required speed. As a matter of facts, usually these pump members or electric pumps are constituted by an electric part comprising an operation motor member, a hydraulic part, comprising the diffuser member, and an oil chamber, interposed between the electric part and the hydraulic part, through seal means for example of the mechanic type, to protect the motor member.

Generally, these pump members are mounted inside a collection tank of the liquid to be transported, entirely or partially immersed, so as to self-activate when the liquid reaches a determined level in the collection tank.

In such cases, the cooling of the electric part occurs by dispersion of the thermal energy generated by the functioning, through the stagnant liquid, which externally touches the pump member as long as it is actually immersed therein. Command means are usually provided, that deactivate the pump member as the liquid level lowers below a minimum threshold at which the electric part is not suitably immersed, for ensuring a sufficient heat dispersion. Consequently, the liquid to be transferred can never be entirely removed from the collection tank and, hence, the size of this latter has to be correspondently increased to take into account the volume of liquid that cannot be removed, thus requiring more space than needed.

To increase the cooling efficacy, some solutions have been proposed, such as the one disclosed in US 3,371,613. This document illustrates a pump member for waste waters comprising a cooling case, external to the motor member, predisposed to receive, by forced circulation, water coming from the pumped liquid, through passage chambers obtained in the impeller. These chambers are predisposed as well to separate the solid part from the liquid part of the pumped liquid, to serve as filter and cause the above mentioned forced circulation.

The presence of solid particles, mainly sand, can considerably affect the efficiency of the circulation of the cooling liquid, as the particles can obstruct the passage chambers, thus increasing the brushing friction and hence the production of heat in spite of the mechanical performance of the pump.

According to a different type of assembly, the pump members of the known type can work in "dry mode", that is in emerged condition with respect to the liquid to be transferred. In these cases, for example, the liquid is pumped from ad adjacent chamber to the chamber in which the pump member is installed, through suitable connection piping. The cooling of the generated heat can be performed by air, with the aid of a ventilation member suitably associated with the same pump member.

Patent US 5,616,973 discloses, instead, a pump member, in particular for use in plants for treating water, in which the cooling of the motor member occurs through the forced circulation of air in a closed circuit obtained inside a case external to the electric part.

Patent US 2003/0143093 discloses a centrifugal pump operated by an electric motor, associated with a hydraulic cooling system, connected in thermal exchange with an oil cooling system arranged inside the motor for the thermal control.

Patent EP2604860 discloses a centrifugal pump operated by a motor member, comprising a rotor embedded in a chamber containing air, and a stator separated from the above mentioned chamber. The rotor is cooled by the circulation of a cooling fluid that crosses the above mentioned chamber separated from the stator of the motor member. Patent US 2009/0324436 discloses a centrifugal pump, in particular a submerged one, comprising an auxiliary cooling pump, operated by the same electric motor member of the centrifugal pump, to carry out the circulation of a cooling fluid in a gap external to the same motor member.

Patent US 2014/0105769 discloses a centrifugal pump with high thermal resistance, while patent WO2014/090613 discloses a further example of a cooling system for a centrifugal pump, in which a gap filled with gas is interposed between the external case of the pump and an internal case, which wraps the stator of the electric motor member of the pump.

Finally, patent JP 2002/017071 discloses an electric motor connected with a centrifugal pump, in which the stator is provided with an injection opening to supply cooling air to the rotor. A nozzle is arranged inside the same opening to supply water drops along with cooling air in the space between rotor and stator.

These solutions are particularly complex and hence expensive.

Therefore, the proposed solutions do not fully satisfy the needs of the specific technical field, being structurally complex as well as not completely reliable in all use conditions.

### Presentation of the invention

The task of the present invention is to solve the cited problems, by providing a centrifugal pump with reliable functioning, which allows an efficient cooling of the motor member.

Within such task, it is a further scope of the present invention that of providing an electric pump provided with an optimal functioning in any application field.

Another scope of the invention is to provide an electric pump that can be used with optimal hydraulic and mechanic performance, in efficient and versatile way.

A further scope of the invention is to provide an electric pump of simple constructive and functional conception, provided with surely reliable functioning as well as relatively economic cost.

The cited scopes are reached, according to the present invention, by the electric pump according to claim 1.

The electric pump according to the invention comprises a drive shaft, also called pump shaft, having a longitudinal axis, a chamber containing air, a motor member contained inside the above mentioned chamber containing air and comprising a fixed stator and a rotor joined to the above mentioned pump shaft, to operate in rotation the same drive shaft about the cited longitudinal axis.

The electric pump comprises at least one pump stage, comprising an impeller joined to the pump shaft and a diffuser member fixed relatively to the impeller, to pump a pumping liquid from a suction part to a delivery part of the electric pump. The electric pump further comprises a cooling device for cooling the aforesaid motor member.

According to the invention, the cooling device comprises a containment body for a cooling liquid, as well as a conveying circuit to cause the forced circulation of the cooling liquid contained in the containment body, which comprises at least one emission opening in communication with the chamber containing air, which comprises the motor member to be cooled. In substance, the above mentioned circuit allows to carry out the emission of the cooling liquid in sprayed state into the chamber containing air and thus to efficiently cool the motor member.

More precisely, the aforesaid conveying circuit directly crosses both the rotor and the stator of the electric motor. The specific state, sprayed, of emission of the cooling liquid from the aforesaid emission opening of the conveying circuit allows to carry out the efficient cooling of the motor member, without compromising the performance of the motor member that is directly affected by the sprayed fluid. More precisely, the cooling fluid in sprayed state, that, according to the invention, crosses both the rotor and the stator of the motor member, does not slow down the relative rotation motion generated at the drive shaft.

The containment body is preferably set between the operation unit and the hydraulic unit, in particular between a pump stage and the motor member, to cause the circulation of the cooling liquid through a circuit that invests and thus cools the motor member, preferably by forced convection.

A feature of the invention is that the containment body of the cooling device is mounted in fixed manner to a fixed portion of the electric pump, for example to the hydraulic unit.

The containment body can comprise a conveying portion predisposed to be arranged about the cited longitudinal axis.

The device comprises as well a conveying member arranged about the above mentioned conveying portion of the containment body, and fixed to the pump shaft, to cause a rotation relative motion between the same conveying portion and the conveying member further to the operation of the pump shaft.

According to the invention, a passage zone for the cooling liquid is defined between the conveying portion and the conveying member, to convey the cooling liquid through the above mentioned circuit, by virtue of the cited rotation relative motion.

According to a particular aspect of the invention, the circulation allowed by the rotation relative motion between the conveying portion and the conveying member leads the drawing liquid suctioned from the above mentioned containment body through a helical portion of the above mentioned circuit, about the same longitudinal axis.

Further to the cited circulation through the above mentioned helical portion, the cooling liquid "ascends", not necessarily in vertical direction, along the pump shaft.

The cooling liquid is finally sprayed, at the end of a following portion of the forward path of the same circuit, at the head of the motor member, and returns, along a return path, for example of descent, to the containment chamber defined by the cited containment body.

This is allowed, in particular, by the fact that the pump shaft includes itself a portion of circuit, in the forward path, preferably shaped by an axial hole, predisposed to put in communication the above mentioned helical portion fed by the containment chamber, from which the cooling liquid is "drawn", with the head of the motor member.

The cooling liquid is preferably of the oil type, collected in the containment chamber in the liquid state.

A feature of the invention is that the cooling liquid, "forced" into the above mentioned forward and return path of the cooling circuit so defined, is drawn in the above mentioned rotation relative motion and progressively warms up by thermal exchange with the crossing "hot" parts. The drawn liquid is then sprayed out from the shaft, mixing with the air being in the chamber containing the motor member. The liquid in the sprayed state touches both the rotor part and the stator part of the motor member, in the return path towards the containment body, efficiently cooling them.

The spayed state produced by the interaction between the cooling liquid and the air surrounding the motor member is very advantageous for the functioning of the pump, as it optimizes the thermal exchange.

As a matter of facts, the cooling liquid in the sprayed state has an exchange surface larger with respect to the liquid state, thus absorbing more quickly and in greater quantity the heat generated by the operation of the motor member.

Moreover, as it was previously said, the cooling liquid in the sprayed state has a reduced friction coefficient with respect to the liquid state, thus opposing a reduced resistance to the rotation of the pump shaft. This contributes to optimize the overall performance of the centrifugal pump.

A particular aspect of the invention is that the conveying member preferably has a bell shape and comprises, at the inner wall, at least one helical groove, predisposed to shape the above mentioned helical portion of the aforesaid cooling circuit. Such helical groove is predisposed to receive the cooling liquid "drawn" from the containment chamber, in the above mentioned forward path.

It is important to underline that the electric pump according to the invention allows to control the integrity of the cooling liquid, by the installation at the containment body of a detection probe. This probe is predisposed to signal the degradation of the liquid in due course, so as to allow possible preventive maintenance operations.

### Description of the drawings

The details of the invention shall be more apparent from the detailed description of a preferred embodiment of the electric pump according to the invention, illustrated by way of example in the attached drawings, wherein:
figure 1 shows an axial cross-section view of a centrifugal pump according to the invention;
figure 2 shows a perspective view of a detail of a cooling device used in the same electric pump;

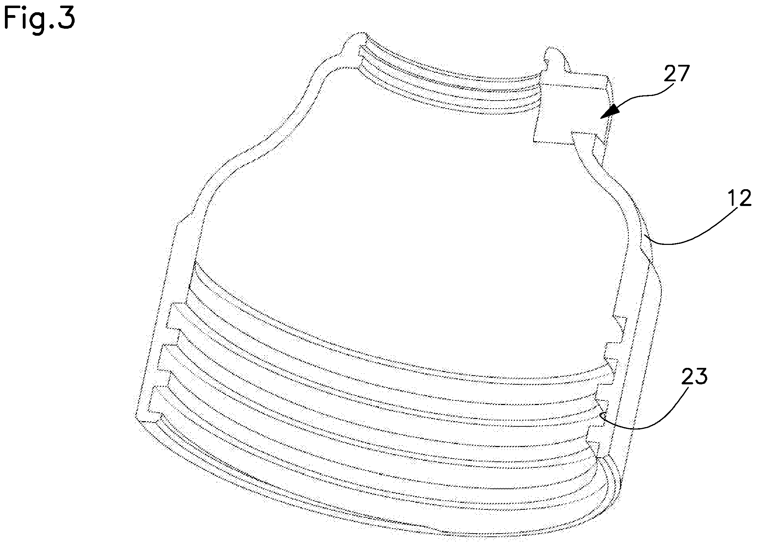

figure 3 shows a perspective axial cross-section view of a component of the detail shown in figure 2.

### Embodiments of the invention

With particular reference to such figures, a centrifugal pump suitable to pump a liquid, for example industrial liquid or wastewaters, from an inlet or suction part 2 to an outlet or delivery part 3 through at least one pump stage 4, is indicated in its entirety with 1.

The electric pump 1 has a longitudinal axis A that, in the case illustrated by way of example, is predisposed for a vertical assembly. As an alternative, the electric pump 1 can be installed with horizontal longitudinal axis A or differently inclined.

The electric pump 1 is provided with an electric operation unit 5 comprising a motor member 6, and a hydraulic unit 7 comprising the cited pump stage 4, the suction part 2 and the delivery part 3 of the pumped liquid. The motor member 6 comprises a stator 61 fixed to the electric pump body 1, and a rotor 62 joined to a drive shaft, also called pump shaft 8, arranged according to the longitudinal axis A to operate the pump stage 4. In particular, the pump stage 4 comprises an impeller 9 joined to the pump shaft 8 to transfer the suctioned liquid from the suction part 2 to the delivery part 3.

The operation unit 5 comprises a cover 51 in which the motor member 6 is contained, arranged according to the longitudinal axis A.

The hydraulic unit 7 comprises a fixed body 71 shaping the diffuser member, inside which the impeller 9 is housed, to operate the transfer of the liquid to be pumped.

The cooling device 10 is preferably set between the operation unit 5 and the hydraulic unit 7.

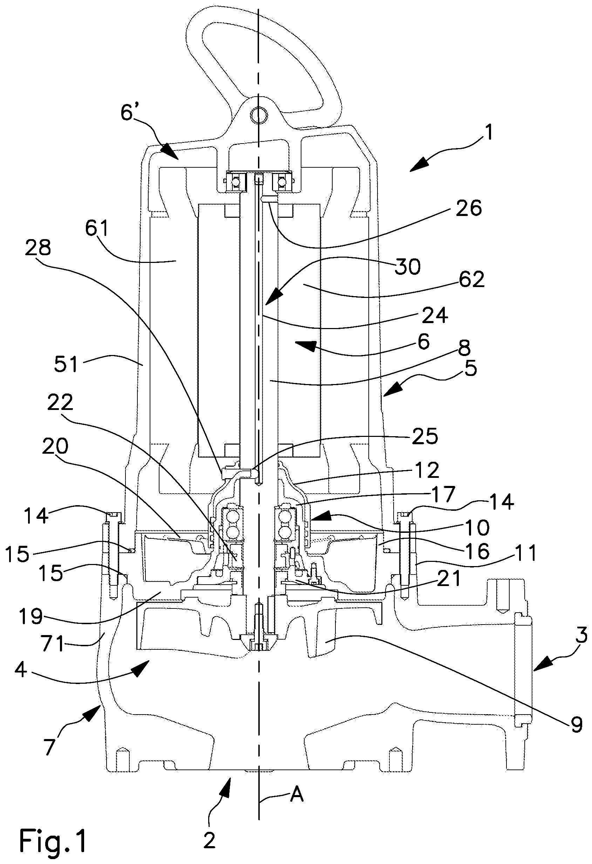

The cooling device 10 comprises a containment body 11 for a cooling liquid, preferably oil, and a conveying member 12 for the same liquid, associated with the pump shaft 8 (see figure 1).

More precisely, the containment body 11 defines a containment chamber for the cooling liquid, separated by suitable seal means from the hydraulic unit 7 and from the operation unit 5.

The containment body 11 is predisposed to be fixed, that is joined, to the fixed parts of the electric pump 1. To this aim, the containment body 11 peripherally shapes fixing portions 13, for the coupling with respective end portions, preferably flanged, respectively of the cover 51 of the operation unit 5 and of the diffuser member 71 of the hydraulic unit 7. The above mentioned coupling occurs preferably through fixing means 14, for example of the screw type, and annular seal means 15.

The containment body 11 shapes a side wall 16, preferably substantially cylindrical, from which externally protrude the above mentioned fixing portions 13 which in the illustrated case are six, but they can be in different number, provided that they are suitable for the fixing function.

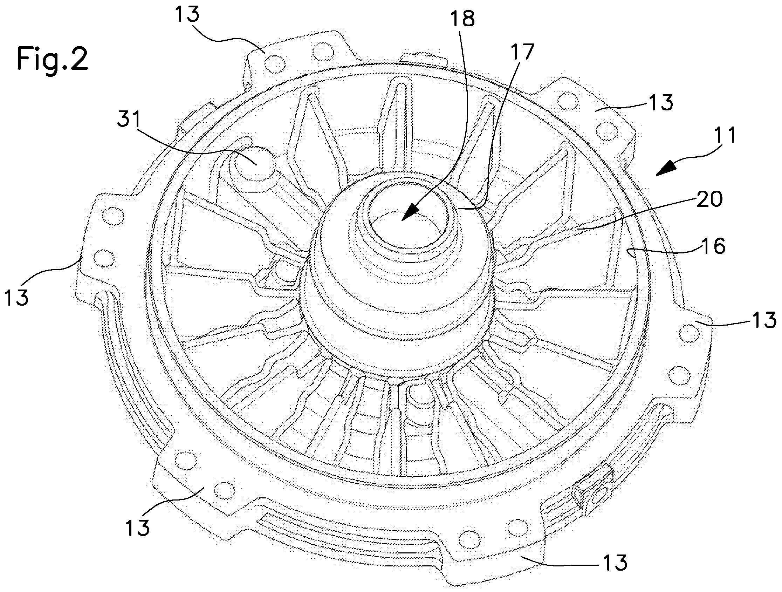

The containment body 11 further shapes a conveying portion 17, for example having the shape of a central sleeve, provided with a central opening 18, for insertion of the pump shaft 8. The central sleeve 17 and the side wall 16 are arranged coaxial according to the same longitudinal axis A of the electric pump 1. The side wall 16, substantially cylindrical, and the central sleeve 17 are joined through an annular base 19 that serves as separation sect with respect to the hydraulic unit 7 (see figures 1 and 2).

The containment body 11 preferably comprises a plurality of connection fins 20, for example arranged in substantially radial manner about the longitudinal axis A, to increase the thermal exchange surface with the cooling liquid contained in the cited containment chamber defined by the same containment body 11, integral with the fixed parts of the electric pump 1

Preferably, the fins 20 extend in continuous and ordered manner between the side wall 16 and the central sleeve 17.

The containment body 11 is preferably associated with a closure lid 21 inserted in rotatable manner about the pump shaft 8 through the interposition of seal means 22, to ensure the sealing closure of the hydraulic unit 7, to prevent any leaking of the pumped liquid in the containment body 11 and, vice versa, of the cooling liquid inside the hydraulic unit 7.

The conveying member 12 is fixed to the pump shaft 8, to convey the cooling liquid collected in the chamber of the containment body 11 to the head of the motor member 6 through the same pump shaft 8.

More precisely, the conveying member 12 preferably shapes a tubular element for example being bell-shaped, arranged coaxial about the conveying portion 17 of the fixed containment body 11.

Between the internal wall of the conveying bell 12 and the external wall of the conveying portion 17 at least one passage zone 23 for the cooling liquid is defined, so as to contribute to the realization of a circuit for the forced circulation of the cooling liquid from the same containment body 11 towards the head of the motor member 6, preferably through the pump shaft 8, as it is better described in the following.

The cited circuit comprises, in particular, a forward path, in which the cooling liquid is suctioned from the collection chamber by the pump shaft 8 towards the head of the motor member, at the end of the pump shaft 8, and a return path, at which the cooling liquid comes back from the head of the drive shaft to the collection chamber, to start a new cycle.

The cited passage zone 23, then, preferably has helical shape and belongs to the cited forward path of the cooling circuit, at which the conveyed liquid, still "cool", starts ascending the "hot" parts of the working electric pump 1, to carry out an efficient thermal exchange.

Preferably, the cited passage zone 23 is made up of a helical portion, that is one or more helical grooves predisposed to guide the above mentioned forced circulation, by "suctioning" the cooling liquid collected in the containment body 11 ascending towards pump shaft 8, by virtue of the relative rotation between the same fixed containment body 11 and the conveying bell 12 integrally rotating with the pump shaft 8.

The above mentioned circulation continues through the pump shaft 8 in the above mentioned forward path of the circuit.

In particular, the pump shaft 8 suitably comprises a portion of circuit 30 predisposed to bring the cooling liquid "suctioned" from the helical stretch 23 towards the head of the motor member 6. More precisely, the portion of circuit 30 can be made on the same shaft, preferably through an ascent channel 24, preferably axial and through at least one transverse passage 25, of connection with the passage zone 23, and through at least one emission opening 26 in communication with the chamber 6' containing the motor member 6, preferably at the head height.

The above mentioned circuit through which occurs the forced circulation of the cooling liquid substantially comprises the collection volume of the containment body 11, the passage zone 23, the portion of circuit 30 inside the pump shaft 8 and the inner part of the operation unit 5 through which the cooling liquid so suctioned drops in the collection volume of the containment body 11 to be put again in circulation, thanks to the continuous rotation of the same pump shaft 8.

In practice, the cooling liquid, at the end of the aforesaid forward path, is sprayed out through the discharge opening 26, at the head of the motor member 6, directly reaching both the stator 61 and the rotor 62. Therefore, the cooling liquid interacts with the air present in the operation unit 5, thus cooling the same motor member 6, in the cited return path of the circuit, in a sprayed state, more efficient for the thermal exchange.

The conveying bell 12 further comprises an inlet 27 for the supply of the cooling liquid, for example directly from the passage zone 23. The inlet opening 27 can be provided coaxial to the cited transverse passage 25. Moreover the opening is provided with a removable closure lid 28.

In practice, the cooling liquid is suctioned from the containment chamber of the box body 11, towards the head of the motor member 6 by virtue of the drawing generated by the rotation of the same pump shaft 8 and then of the bell 12. Subsequently, further to the drawing along the cited forward path and the forced exit from the transverse passage 26, the cooling liquid interacts with the air present inside the operation unit 5, being sprayed. The rotor part of the motor member 6 thus works in rotation in a sprayed liquid, having reduced friction coefficient with respect to the sole liquid not sprayed, for the benefit of the performance of the electric pump 1.

On the containment body 11 or box body a housing seat 31 can usefully be provided for a detection probe of the conditions of the cooling liquid, so as to detect possible degradation and then send signals to the control unit of the pump that allow to carry out maintenance preventive operations.

The functioning of the electric pump according to the invention is easy to understand from the preceding description.

In a starting preparation step, the cooling device 10 is prepared for the assembly in the electric pump 1. In particular, the containment body 11 and the conveying member 12 are assembled about the pump shaft 8.

The cooling device 10 is then inserted on the hydraulic unit 7 and filled with the cooling liquid through the introduction opening 28.

The cooling device 10 is finally sealed between the electric operation unit 5 and the hydraulic unit 7.

The electric pump 1 is then arranged in a collection tank or in a dry space to pump a pumping liquid, for example wastewaters. For the functioning of the cooling device 10, the pump 1 can be installed with longitudinal axis A, vertical, horizontal or different, indifferently. In any case, the cooling is operated by the cooling device 10 in efficient way.

When the centrifugal pump 1 is started, operating in rotation the pump shaft 8, the pumping liquid is suctioned from the suction part 2 to the delivery part 3.

At the same time, the rotation relative motion between the conveying portion 17 of the fixed containment body 11 and the conveying member 12 that rotates integrally with the pump shaft 8, "suctions" the cooling liquid from the chamber shaped by the same containment body 11. The cooling liquid is then drawn in a circuit that crosses the helical portion 23 defined between the conveying portion 17 and the conveying member 12, to ascend through the portion of circuit 30 inside the shaft 8.

The cooling liquid is then sprayed in exit through the transverse passage 26 obtained in the same shaft 8, onto the head of the motor member 6, in the sprayed state.

Finally, the cooling liquid achieves the aforesaid circuit, in the return path towards the collection chamber defined by the containment body 11, after having efficiently cooled the motor member 6.

The cooling liquid is then again "drawn" from the above mentioned chamber in a continuous circulation, by the effect of the continuous rotation of the shaft 8.

In practice, the used materials as well as the size and shape may vary according to the needs.

Should the technical characteristics mentioned in the claims be followed by reference signs, such reference signs were included for the sole purpose of increasing the understanding of the claims and thus they shall not be deemed limiting the scope of the element identified by such reference signs by way of example.

## Claims

1. Electric pump comprising a drive shaft (8) having a longitudinal axis (A), a chamber (6') containing air, an electric motor member (6), comprising a rotor (62) joined to said drive shaft (8) and a stator (61) fixed about said rotor (62), said rotor (62) and said stator (61) being arranged inside said chamber (6') containing air, said electric motor member (6) being configured to operate in rotation said drive shaft (8) about said longitudinal axis (A), at least one pump stage (4) comprising an impeller (9) keyed to said drive shaft (8) and a diffuser member (71) fixed relatively to said impeller (9), to pump a pumping liquid from a suction part (2) to a delivery part (3) of said pump, a cooling device (10) to cool said motor member (6), wherein said cooling device (10) comprises a containment body (11) for a cooling liquid and a conveying circuit (23, 24, 25, 26) predisposed to produce the forced circulation of said cooling liquid contained in said containment body (11), said conveying circuit (23, 24, 25, 26) comprising at least one discharge opening (26) being in communication with said chamber (6') containing air, and the electric pump being **characterised in that** said conveying circuit (23, 24, 25, 26) is directly crossing both said rotor (62) and said stator (61) of said motor member (6), to perform the emission of said cooling liquid in a sprayed state by virtue of an interaction between said cooling liquid and said air surrounding said motor member (6), directly on said rotor (62) and on said stator (61) of said motor member (6) contained in said chamber (6') containing air.

2. Electric pump according to claim 1, **characterized in that** said containment body (11) comprises a conveying portion (17) arranged about said longitudinal axis (A), a conveying member (12) being disposed about said conveying portion (17), and fixed to said drive shaft (8), so as to determine a relative rotation motion between said conveying portion (17) and said conveying member (12) upon activation of said drive shaft (8), a passage zone (23) for said cooling liquid being defined between said conveying portion (17) and said conveying member (12), so as to convey said cooling liquid through said conveying circuit (23, 24, 25, 26) under said relative rotation motion.

3. Electric pump according to claim 2, **characterized in that** said discharge opening (26) is arranged in communication with a front side, in use, of said motor member (6) and is obtained on said drive shaft (8), said drive shaft (8) also shaping at least one forward path channel (24) for said cooling liquid, arranged in communication with said discharge opening (26) and with said passage zone (23), so as to comprise a portion (30) of said conveying circuit (23, 24, 25, 26) for said forced circulation of said cooling liquid.

4. Electric pump according to claim 3, **characterized in that** said forward path channel (24) is axial and internal to said drive shaft (8).

5. Electric pump according to claim 4, **characterized in that** said passage zone (23) shapes a helical portion for said cooling liquid around said longitudinal axis (A).

6. Electric pump according to claim 5, **characterized in that** said conveying portion shapes a central sleeve (17) arranged around said longitudinal axis (A), said conveying member (12) being coaxially disposed around said central sleeve (17).

7. Electric pump according to claim 6, **characterized in that** said containment body (11) comprises a side wall (16) of containment, a plurality of fins (20) being arranged between said side wall (16) and said central sleeve (17) to increase the surface for the heat exchange with said cooling liquid inside said containment body (11).

8. Electric pump according to claim 6 or 7, **characterized in that** said passage zone (23) between said conveying member (12) and said central sleeve (17) of said containment body (11) comprises at least one helical groove, through which said cooling liquid is predisposed to go from said containment body (11) to said drive shaft (8).

9. Electric pump according to claim 3, **characterized in that** said conveying member (12) is made in the shape of a bell.

10. Electric pump according to claim 3, **characterized in that** said drive shaft (8) comprises at least one transverse passage (25) of connection between said forward path channel (24) and said passage zone (23), to allow said forced circulation of said cooling liquid.

11. Electric pump according to one of the previous claims, **characterized in that** said containment body (11) is interposed between said pump stage (4) and said motor member (6).

12. Electric pump according to one of the previous claims, **characterized in that** said containment body (11) is constrained to a fixed portion of said electric pump.

## Patentansprüche

1. Elektropumpe umfassend eine Antriebswelle (8), die eine Längsachse (A), eine Luft enthaltende Kammer (6'), ein Element (6) vom elektrischen Motor, das einen Rotor (62) umfasst, der mit der Antriebswelle (8) verbunden ist, und einen Stator (61) hat, der um den Rotor (62) befestigt ist, wobei der Rotor (62) und der Stator (61) innerhalb der Luft enthaltenden Kammer (6') angeordnet sind, wobei das Element vom elektrischen Motor (6) so ausgestaltet ist, dass es die Antriebswelle (8) um die Längsachse (A) in Rotation betätigt, wobei mindestens eine Pumpenstufe (4) ein Laufrad (9), das mit der Antriebswelle (8) verkeilt ist, und ein Diffusorelement (71), das relativ am Laufrad (9) befestigt ist, um eine Pumpflüssigkeit von einem Saugteil (2) zu einem Abgabeteil (3) der Pumpe zu pumpen, und eine Kühlungsvorrichtung (10) umfasst, um das Motorelement (6) zu kühlen,
wobei die Kühlungsvorrichtung (10) einen Aufnahmekörper (11) für eine Kühlflüssigkeit und einen Förderkreis (23, 24, 25, 26) umfasst, der ausgestaltet ist, um die Zwangsumwälzung der im Aufnahmekörper (11) enthaltenden Kühlflüssigkeit herzustellen, wobei der Förderkreis (23, 24, 25, 26) mindestens eine Ablauföffnung (26) umfasst, die mit der Luft enthaltenden Kammer (6') in Kommunikation steht, und wobei die Elektropumpe **dadurch gekennzeichnet ist, dass** der Förderkreis (23, 24, 25, 26) unmittelbar den Rotor (62) und den Stator (61) des Motorelements (6) kreuzt, um den Austritt der Kühlflüssigkeit in einem gesprühten Zustand durch eine Wechselwirkung zwischen der Kühlflüssigkeit und der das Motorelement (6) umgebenden Luft unmittelbar auf dem Rotor (62) und dem Stator (61) des in der Kammer (6') umfassenden Motorelements (6) zu bewirken, das Luft enthält.

2. Elektropumpe nach Anspruch 1, **dadurch gekennzeichnet, dass** der Aufnahmekörper (11) einen Förderabschnitt (17), der um die Längsachse (A) angeordnet ist, ein Förderelement (12), das um den Förderabschnitt (17) angeordnet und an der Antriebswelle (8) befestigt ist, um eine relative Drehung zwischen dem Förderabschnitt (17) und dem Förderelement (12) durch Betätigung der Antriebswelle (8) zu bewirken, und ein Durchgangsbereich (23) für die Kühlflüssigkeit umfasst, das zwischen dem Förderabschnitt (17) und dem Förderelement (12) derart definiert ist, dass es die Kühlflüssigkeit durch den Förderkreis (23, 24, 25, 26) mittels der relativen Drehbewegung führt.

3. Elektropumpe nach Anspruch 2, **dadurch gekennzeichnet, dass** die Ablauföffnung (26) während der Nutzung mit einer Frontseite des Motorelements (6) in Kommunikation angeordnet ist, und auf der Antriebswelle (8) erhalten wird, wobei die Antriebswelle (8) auch mindestens einen Vorwärtskanal (24) für die Kühlflüssigkeit bildet, der mit der Ablauföffnung (26) und mit dem Durchgangsbereich (23) in Kommunikation angeordnet ist, um einen Abschnitt (30) des Förderkreises (23, 24, 25, 26) für die Zwangsumwälzung der Kühlflüssigkeit zu umfassen.

4. Elektropumpe nach Anspruch 3, **dadurch gekennzeichnet, dass** der Vorwärtskanal (24) axial und innen in Bezug auf der Antriebswelle (8) ist.

5. Elektropumpe nach Anspruch 4, **dadurch gekennzeichnet, dass** das Durchgangsbereich (23) einen spiralförmigen Abschnitt für die Kühlflüssigkeit um die Längsachse (A) bildet.

6. Elektropumpe nach Anspruch 5, **dadurch gekennzeichnet, dass** der Förderabschnitt eine zentrale Hülse (17) bildet, die um die Längsachse (A) angeordnet ist, wobei das Förderelement (12) koaxial um die zentrale Hülse (17) angeordnet ist.

7. Elektropumpe nach Anspruch 6, **dadurch gekennzeichnet, dass** der Aufnahmekörper (11) eine Aufnahmeseitenwand (16) umfasst, wobei eine Vielzahl von Rippen (20) zwischen der Seitenwand (16) und der zentralen Hülse (17) angeordnet ist, um die Oberfläche für den Wärmetausch mit der Kühlflüssigkeit innerhalb des Aufnahmekörpers (11) zu erhöhen.

8. Elektropumpe nach Anspruch 6 oder 7, **dadurch gekennzeichnet, dass** das Durchgangsbereich (23) zwischen dem Förderelement (12) und der zentralen Hülse (17) des Aufnahmekörpers (11) mindestens eine spiralförmige Nut umfasst, durch die die Kühlflüssigkeit ausgelegt ist, vom Aufnahmekörper (11) zur Antriebswelle (8) zu gehen.

9. Elektropumpe nach Anspruch 3, **dadurch gekennzeichnet, dass** das Förderelement (12) in Form einer Glocke ausgebildet ist.

10. Elektropumpe nach Anspruch 3, **dadurch gekennzeichnet, dass** die Antriebswelle (8) mindestens einen Verbindungsquerdurchgang (25) zwischen dem Vorwärtskanal (24) und dem Durchgangsbereich (23) umfasst, um die Zwangsumwälzung der Kühlflüssigkeit zu erlauben.

11. Elektropumpe nach einem der vorhergehenden Ansprüche, **dadurch gekennzeichnet, dass** der Aufnahmekörper (11) zwischen der Pumpenstufe (4) und dem Motorelement (6) eingesetzt ist.

12. Elektropumpe nach einem der vorhergehenden Ansprüche, **dadurch gekennzeichnet, dass** der Aufnahmekörper (11) an einem festen Abschnitt der Elektropumpe gehalten ist.

## Revendications

1. Pompe électrique comprenant un arbre d'entraînement (8) ayant un axe longitudinal (A), une chambre (6') qui contient de l'air, un organe de moteur électrique (6), comprenant un rotor (62) relié audit arbre d'entraînement (8) et un stator (61) fixé autour dudit rotor (62), ledit rotor (62) et ledit stator (61) étant disposés à l'intérieur de ladite chambre (6') qui contient de l'air, ledit organe de moteur électrique (6) étant configuré de manière à actionner en rotation ledit arbre d'entraînement (8) autour dudit axe longitudinal (A), au moins un étage de pompe (4) comprenant un impulseur (9) calé audit arbre d'entraînement (8) et un organe de diffusion (71) fixé relativement audit impulseur (9), de manière à pomper un liquide de pompage d'une partie d'aspiration (2) à une partie de distribution (3) de ladite pompe, un dispositif de refroidissement (10) pour refroidir ledit organe de moteur (6),
ledit dispositif de refroidissement (10) comprenant un corps de contenance (11) pour un liquide de refroidissement et un circuit d'acheminement (23, 24, 25, 26) prédisposé de manière à produire la circulation forcée dudit liquide de refroidissement contenu dans ledit corps de contenance (11), ledit circuit d'acheminement (23, 24, 25, 26) comprenant au moins une ouverture d'évacuation (26) étant en communication avec ladite chambre (6') qui contient de l'air, et la pompe électrique étant **caractérisée en ce que** ledit circuit d'acheminement (23, 24, 25, 26) traverse directement aussi bien ledit rotor (62) que ledit stator (61) dudit organe de moteur (6), pour effectuer l'émission dudit liquide de refroidissement dans un état pulvérisé en vertu d'une interaction entre ledit liquide de refroidissement et ledit air entourant ledit organe de moteur (6), directement sur ledit rotor (62) et sur ledit stator (61) dudit organe de moteur (6) contenu dans ladite chambre (6') qui contient de l'air.

2. Pompe électrique selon la revendication 1, **caractérisée en ce que** ledit corps de contenance (11) comprend une partie d'acheminement (17) disposée autour dudit axe longitudinal (A), un organe d'acheminement (12) étant disposé autour de ladite partie d'acheminement (17) et fixé audit dudit arbre d'entraînement (8), de manière à déterminer un mouvement de rotation relative entre ladite partie d'acheminement (17) et ledit organe d'acheminement (12) lors de l'activation dudit arbre d'entraînement (8), une zone de passage (23) pour ledit liquide de refroidissement étant définie entre ladite partie d'acheminement (17) et ledit organe d'acheminement (12), de manière à acheminer ledit liquide de refroidissement à travers ledit circuit d'acheminement (23, 24, 25, 26) avec ledit mouvement de rotation relative.

3. Pompe électrique selon la revendication 2, **caractérisée en ce que** ladite ouverture d'évacuation (26) est disposée en communication avec un côté antérieur, lors de l'utilisation, dudit organe de moteur (6) et est obtenu sur ledit arbre d'entraînement (8), ledit arbre d'entraînement (8) formant aussi au moins un canal de parcours vers l'avant (24) pour ledit liquide de refroidissement, disposé en communication avec ladite ouverture d'évacuation (26) et avec ladite zone de passage (23), de manière à comprendre une partie (30) dudit circuit d'acheminement (23, 24, 25, 26) pour ladite circulation forcée dudit liquide de refroidissement.

4. Pompe électrique selon la revendication 3, **caractérisée en ce que** ledit canal de parcours vers l'avant (24) est axial et intérieur audit arbre d'entraînement (8).

5. Pompe électrique selon la revendication 4, **caractérisée en ce que** ladite zone de passage (23) forme une partie hélicoïdale pour ledit liquide de refroidissement autour dudit axe longitudinal (A).

6. Pompe électrique selon la revendication 5, **caractérisée en ce que** ladite partie d'acheminement forme un manchon central (17) disposé autour dudit axe longitudinal (A), ledit organe d'acheminement (12) étant disposé coaxialement autour dudit manchon central (17).

7. Pompe électrique selon la revendication 6, **caractérisée en ce que** ledit corps de contenance (11) comprend une paroi latérale (16) de contenance, une pluralité d'ailettes (20) étant disposée entre ladite paroi latérale (16) et ledit manchon central (17) de manière à augmenter la surface pour le transfert de chaleur avec ledit liquide de refroidissement à l'intérieur dudit corps de contenance (11).

8. Pompe électrique selon la revendication 6 ou 7, **caractérisée en ce que** ladite zone de passage (23) entre ledit organe d'acheminement (12) et ledit manchon central (17) dudit corps de contenance (11) comprend au moins une rainure hélicoïdale, à travers laquelle ledit liquide de refroidissement est prédisposé pour aller dudit corps de contenance (11) audit arbre d'entraînement (8).

9. Pompe électrique selon la revendication 3, **caractérisée en ce que** ledit organe d'acheminement (12) est effectué avec la forme d'une cloche.

10. Pompe électrique selon la revendication 3, **caractérisée en ce que** ledit arbre d'entraînement (8) comprend au moins un passage transversal (25) de connexion entre ledit canal de parcours vers l'avant (24) et ladite zone de passage (23), pour permettre ladite circulation forcée dudit liquide de refroidissement.

11. Pompe électrique selon l'une quelconque des revendications précédentes, **caractérisée en ce que** ledit corps de contenance (11) est interposé entre ledit étage de pompe (4) et ledit organe de moteur (6).

12. Pompe électrique selon l'une quelconque des revendications précédentes, **caractérisée en ce que** ledit corps de contenance (11) est solidaire d'une partie fixe de ladite pompe électrique.
